Europäisches Patentamt

European Patent Office

Office européen des brevets

(19)

(11) Numéro de publication: **0 021 943**
**B1**

(12) **FASCICULE DE BREVET EUROPEEN**

(45) Date de publication du fascicule du brevet: **02.03.83**

(51) Int. Cl.³: **H 04 L 27/10, H 04 L 25/49**

(21) Numéro de dépôt: **80400836.5**

(22) Date de dépôt: **10.06.80**

(54) Système de transmission hyperfréquence de données numériques.

(30) Priorité: **22.06.79 FR 7916058**

(43) Date de publication de la demande:
**07.01.81 Bulletin 81/1**

(45) Mention de la délivrance du brevet:
**02.03.83 Bulletin 83/9**

(84) Etats contractants désignés:
**CH DE FR GB IT LI NL SE**

(56) Documents cités:
**FR - A - 2 351 547**

**L'ONDE ELECTRIQUE, vol. 58, no. 1, janvier
1978, Paris, FR. W. MAUREL: "Exemples de
transcodage adapté à la transmission
numérique", pages 50—55.**

**IEEE TRANSACTIONS ON AEROSPACE AND
ELECTRONICS, vol. AES-6, no. 4, juillet 1970,
New York, USA R. A. GONSALVES:
"Performance of Manchester coded FSK", pages
598 à 599.**

(73) Titulaire: **THOMSON-CSF
173, Boulevard Haussmann
F-75379 Paris Cedex 08 (FR)**

(72) Inventeur: **Dehaene, Jean-Pierre
"THOMSON-CSF"SCPI 173, Bld Haussmann
F-75360 Paris Cedex 08 (FR)**

(74) Mandataire: **Turlèque, Clotilde et al,
THOMSON-CSF SCPI 173, Bld Haussmann
F-75379 Paris Cedex 08 (FR)**

(56) References cited:
**IEEE TRANSACTIONS ON COMMUNICATIONS
vol. COM-20, octobre 1972, no. 5, New York,
USA H. P. HARMANN: "Spectrum of
Manchester coded FSK", pages 1001 à 1004.**

**IEEE TRANSACTIONS ON POWER APPARATUS
AND SYSTEMS, vol. PAS-85, no. 10, octobre
1966, New York, USA A. H. BALLARD: "A new
multiplex technique for communication
systems", pages 1054—1059.**

Courier Press, Leamington Spa, England.

Système de transmission hyperfréquence de données numériques

La présente invention concerne les systèmes de transmission de données numériques et plus particulièrement les modulateurs -démodulateurs de signaux binaires à démodulation cohérente pour transmission sur ondes millimétriques.

L'utilisation de modulateurs-démodulateurs à démodulation cohérente permet de s'affranchir de la stabilité de fréquence, difficile à obtenir en ondes millimétriques, qui est exigée des dispositifs à démodulation de phase différentielle, pour garder, en liaison, un rapport signal à bruit optimal. Mais la démodulation de phase cohérente nécessite une restitution de porteuse à la réception.

Afin d'éviter le coût de la génération et de l'émission d'un signal approprié à cette restitution, il est connu, par exemple du document FR—A—2351547, à l'émission, de moduler en fréquence un oscillateur à partir des données à transmettre transformées après codage.

Un premier type de codage utilise un codage en signaux de type Walsh I (cette dénomination correspondant au fait que ces signaux sont identiques au premier vecteur de base de la décomposition en fonctions de Walsh).

Ainsi, à partir de deux composantes en quadrature du signal modulé, il est possible de démoduler facilement, l'une des composantes portant l'information proprement dite sous la forme d'une modulation par sauts de phase, l'autre composante portant l'information porteuse et rythme, ce qui permet, après récupération de la porteuse, de réaliser une démodulation cohérente.

L'inconvénient de ce premier type de codage associé à la modulation de fréquence, provient du fait qu'une densité de modulation apparaît dans le spectre autour de la fréquence centrale, ce qui a pour effet de créer des variations de phase sur la porteuse récupérée dans le récepteur par filtrage ou boucle d'asservissement de phase.

Un second type de codage, connu du document FR—A—2351547, utilise un codage en signaux de type Walsh II (deuxième vecteur de base de la décomposition en fonctions de Walsh).

Ce type de codage a l'advantage de conduire à un signal modulé en fréquence qui comporte une raie centrale exempte de modulation, mais nécessite une bande de fréquence plus grande, ce qui est gênant surtout lorsque des forts débits d'information doivent être transmis.

La présente invention a pour objet de réduire sensiblement les inconvénients de ces deux solutions tout en gardant leurs avantages respectifs pour réaliser une démodulation cohérente de signaux modulés en fréquence, le spectre de ces signaux ne présentant pas de densité de modulation autour de la fréquence porteuse, ce qui facilite la récupération de la porteuse dans ce spectre, et en même temps, la largeur de bande utile du spectre restant assez faible, ce qui est important en particulier pour les forts débits d'information.

Selon l'invention, un système de transmission hyperfréquence de données numériques, formé d'un émetteur et d'un récepteur associé, l'émetteur comportant un dispositif de codage ayant une entrée recevant les données numériques de rythme $1/T$ et une sortie de signal codé, et un oscillateur hyperfréquence libre ayant une entrée de modulation de fréquence reliée à la sortie du dispositif de codage, pour délivrer directement le signal modulé à transmettre, le récepteur comportant en série des étages d'entrée, un démodulateur de phase cohérent et un dispositif de décodage, est caracterisé en ce que le dispositif de codage comporte en série un premier codeur réalisant un codage par blocs de n symboles de la suite des données numériques de période T en blocs de N symboles de période $T'<T$ à deux états, n et N étant des nombres entiers et $N>n$, chaque bloc de N symboles étant à somme bornée, et un deuxième codeur réalisant un codage de type Walsh I de la suite des symboles fournie par le premier codeur, en ce que le démodulateur restitue la suite d'éléments binaires de période T', et en ce que le dispositif de décodage comporte un décodeur réalisant l'opération inverse de celle effectuée par le premier codeur.

L'invention sera mieux comprise et d'autres caractéristiques apparaîtront à l'aide de la description ci-après et des dessins s'y rapportant sur lesquels:
—la figure 1 est le schéma d'un exemple de système de transmission selon l'invention;
—les figures 2a, 2b, 2c, 2d, et 2e et 3a, 3b et 3c représentent des diagrammes explicatifs.

Le système de transmission selon l'invention est tel que les données numériques à transmettre sont transmises à un émetteur qui les code suivant un codage à somme bornée dont la propriété est de supprimer la modulation autour des raies du spectre de rythme puis d'effectuer un codage en fonctions de Walsh de type Walsh I. Ce derneir codage ne modifie pas la caractéristique obtenue par le premier codage, à savoir l'absence d'énergie due à la modulation proprement dite autour des raies du spectre de rythme.

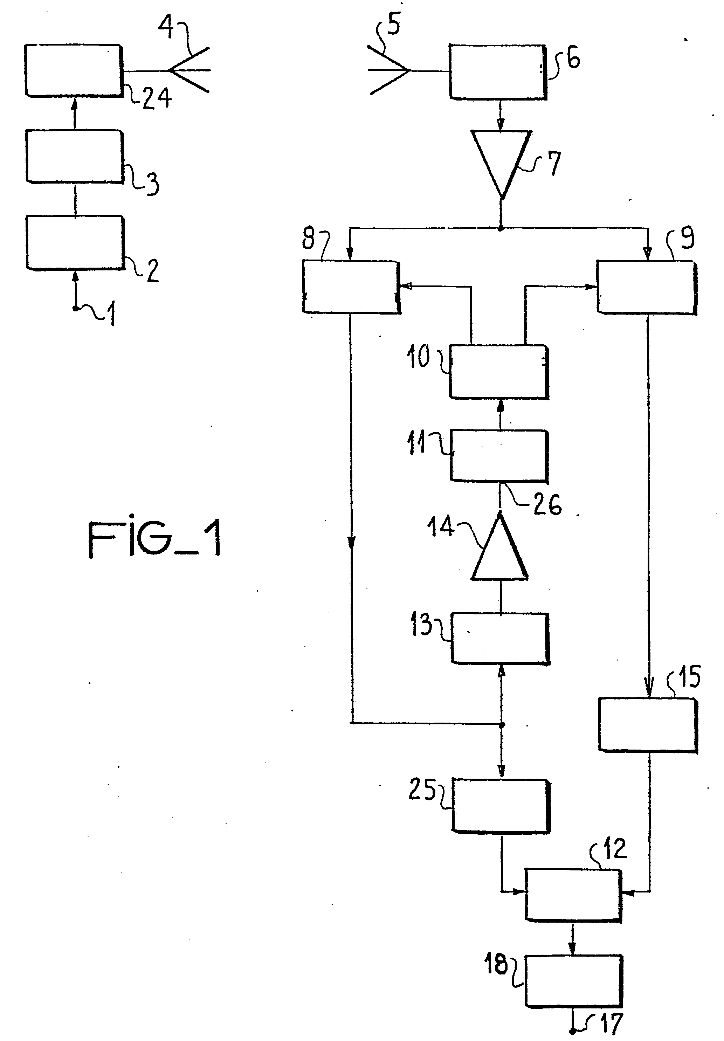

Sur la figure 1, des informations numériques appliquées sur la borne d'entrée 1 sont transformées en blocs de symboles à deux états, chaque bloc étant à somme bornée, dans un codeur 2 puis codées en signaux type Walsh I dans un codeur 3, avant de moduler en fréquence un oscillateur 24, oscillant librement dans une gamme d'ondes millimétriques et alimentant un aérien d'émission 4. Les signaux captés par un aérien de réception 5 sont con-

vertis dans un spectre à fréquence intermédiaire par un convertisseur 6 constitué d'un mélangeur alimenté par un oscillateur local libre. Les signaux à fréquence intermédiaire, après amplification dans un amplificateur 7, alimentent un démodulateur qui comprend deux comparateurs de phase 8 et 9 recevant chacun sur une de leurs deux entrées la porteuse modulée en fréquence intermédiaire et sur leur autre entrée les signaux délivrés respectivement par les deux sorties d'un coupleur à quadrature 10 alimenté par un oscillateur asservi 11. La sortie du comparateur 8 est connectée à l'entrée d'un filtre de signal 25 et à l'entrée de commande en fréquence 26 de l'oscillateur 11 à travers un filtre passe bas 13 suivi d'un amplificateur 14 fixant la fonction de transfert de la boucle d'asservissement de phase. Un circuit régénérateur 12 a une entrée connectée à la sortie du filtre de signal 25 et une deuxième entrée connectée à la sortie du comparateur 9 à travers un filtre passe bande 15. La sortie de ce régénérateur 12 est connectée à la sortie 17 du récepteur à travers le décodeur 18, correspondant à la fonction inverse du codeur 2.

Le codeur 2 (figure 1) effectue un codage binaire à somme bornée des informations numériques à transmettre, c'est-à-dire qu'à n bits d'informations il en fait correspondre un nombre N>n; il introduit donc une redondance ayant pour but de maintenir bornée, à chaque instant, la somme de tous les éléments binaires transmis.

Il en résulte ainsi une densité spectrale nulle à la fréquence porteuse et aux fréquences $F_o \pm k/T'$ où k est un nombre entier quelconque et T' la nouvelle période du train d'éléments binaires qui est par définition inférieure à T et fonction du rapport n/N.

Dans l'exemple décrit, n=3 et N=4 d'où $1/T'=4/3T$.

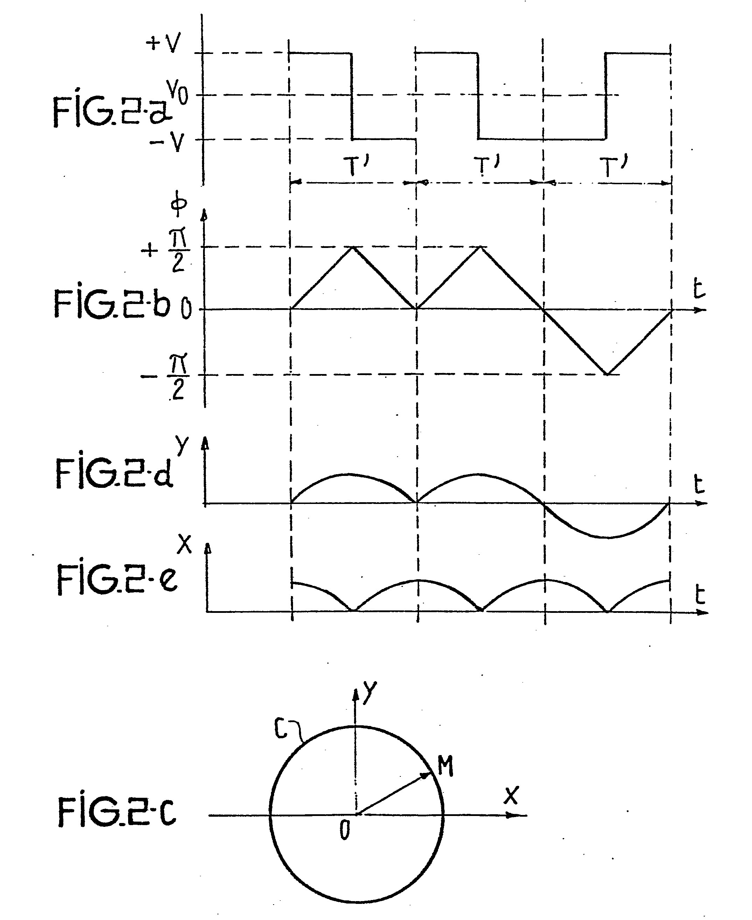

Le fonctionnement sera décrit en s'aidant des figures 2a, 2b, 2c, 2d et 2e.

Sur ces figures, la courbe, 2a, représente une succession de trois éléments binaires fournis par le codeur 3, en correspondance avec des signaux logiques respectifs "1", "1" et "0" fournis par le codeur 2.

Ces éléments ont une durée T' pendant laquelle ils prennent chacun successivement deux valeurs logiques "+1" et "−1" auxquelles correspondent respectivement des tensions de modulation +V et −V symétriques d'une tension $V_o$ déterminant la fréquence de repos $F_o$ de l'oscillateur 3. A +V correspond une fréquence $F_o + \Delta F$ et à −V, $F_o - \Delta F$. Chaque élément correspondant à un signal "1" prend la valeur +V de O à T'/2 et −V de T'/2 à T', ces valeurs sont inversées pour un signal "0". La figure 2a représente donc la suite 110.

Ces signaux sont identiques au premier vecteur de base de la décomposition en fonctions de Walsh, généralement dénommés Walsh I. ΔF, et donc V, sont choisis de manière qu'à la fin d'une durée T'/2 pendant laquelle l'élément binaire présente la même valeur, la variation de phase par rapport au signal non modulé donne un saut de phase de $\pi/2$.

La courbe 2b représente la variation de phase correspondante du signal porteur modulé par ces éléments binaires, 110.

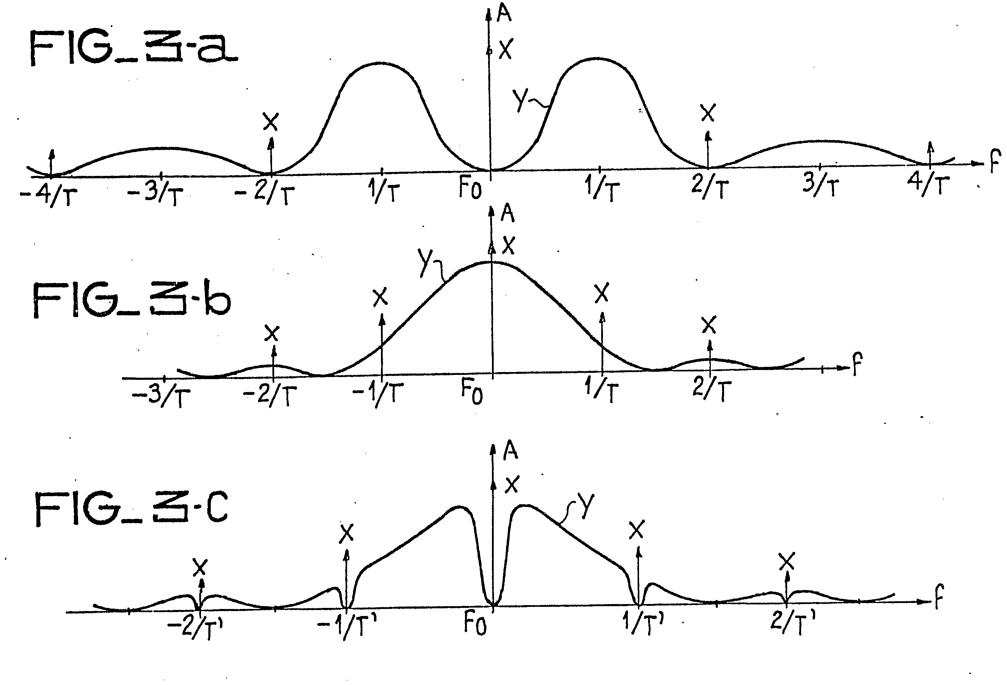

La figure 3c illustre le spectre obtenu dans ces conditions. Les figures 3a et 3b représentent le spectre obtenu par une modulation de fréquence associée respectivement à un codage de type Walsh II et à un codage de type Walsh I.

La figure 3a représente donc l'amplitude A du spectre ainsi obtenu pour des symboles d'une durée T et une fréquence porteuse de l'oscillateur égale à $F_o$. La courbe Y représente la partie utile modulée du signal et X des raies discrètes espacées entre elles de 2/T. Les deux parties du spectre sont bien distinctes et il est aisé d'extraire, d'une part, des signaux de modulation de type biphase sous forme de signaux sinusoïdaux au lieu des signaux de modulation rectangulaires habituels et, d'autre part, un signal porteur périodique de période fondamentale moitié de celle du rythme. Mais comme indiqué ci-dessus, ces dispositions présentent l'inconvénient de générer un spectre assez large, ayant une bande de Nyquist en haute fréquence de largeur sensiblement égale à 3/T; de plus, la raie rythme récupérable est, en fait, à une fréquence double de la fréquence du rythme, et il est necessaire de lever l'ambiguïté introduite par la division par 2.

Pour une même durée T des symboles le spectre d'un signal obtenu par codage de type Walsh I et modulation de fréquence, est représenté par la figure 3b avec les mêmes notations. L'énergie, dans le spectre de modulation, est contenue pour l'essentiel dans une largeur de bande égale à 1/T, donc approximativement 3 fois plus étroite que précédemment pour transmettre la même quantité d'informations. On obtient également une raie à la fréquence porteuse ainsi que des raies à la fréquence rythme; mais comme indiqué ci-dessus, leur récupération est rendue délicate par suite de la densité d'énergie due à la modulation proprement dite autour de ces raies.

En comparant le spectre de la figure 3c à celui représenté par la figure 3b, déjà citée, il est constaté un isolement des raies porteuses par rapport à la modulation, comparable à ce qui est obtenu avec le spectre résultant de signaux de type Walsh II (figure 3a déjà citée) mais également l'avantage d'une largeur de bande utile du spectre (1er lobe) qui lui est de deux fois intérieure et qui n'est augmentée que de 1/3 par rapport à celle obtenue avec des signaux de type Walsh I à somme non bornée, le débit des informations émises étant multiplié par 4/3.

Cette forme de spectre plus concentré présente également l'avantage de diminuer les risques de perturbation entre spectres voisins.

La restitution des données à la réception est obtenue de manière simple selon le processus de démodulation cohérente d'un signal constitué de deux porteuses en quadrature dont l'une contient l'information de rythme et l'autre l'information proprement dite qui se différencie des signaux binaires habituels par le fait que le démodulateur restitue des signaux binaires sinusoïdaux à partir des signaux rectangulaires de modulation; c'est en effet la caractéristique de cette modulation de fréquence par des signaux Walsh I de permettre la réalisation de cette fonction de filtrage qui aboutit à faire correspondre une arche de sinusoïde à chaque signal binaire rectangulaire.

Ceci est illustré par les figures 2c à 2e.

La figure 2c est la représentation trigonométrique de la courbe 2b, précédemment décrite, sous forme d'un point M parcourant à vitesse constante de $-\pi/2$ à $+\pi/2$ un cercle trigonométrique C d'axes de coordonnées OX et OY; les projections du point M sur ces mêmes axes donnent lieu respectivement aux courbes des figures 2d et 2e.

Le signal biphase d'information de la courbe 2d est obtenu, à partir du montage de la figure 1, en sortie du comparateur 8, ce comparateur est tel qu'il fournit une tension nulle lorsque les signaux qui lui sont appliqués sont en quadrature de phase; l'asservissement de l'oscillateur 11 permet de maintenir nulle la valeur moyenne de ce signal de sortie du comparateur 8 filtrée par le filtre passe bas 13.

La conversion de ces signaux biphase en éléments binaires classiques est opérée par le circuit de régénération 12 à partir du signal représenté sur la figure 2e obtenu en sortie du comparateur 9, semblable au comparateur 8, mais alimenté en quadrature de phase par rapport à ce dernier par la seconde sortie du coupleur 10.

Ce signal, 2e, identique quel que soit le signe de l'élément binaire modulant, a une valeur moyenne non nulle, caractéristique du niveau reçu par le récepteur, et qui peut donc servir à réaliser une commande automatique de son gain. Il présente également une raie à la fréquence rythme permettant ainsi la régénération.

Enfin les données numériques initiales sont restituées à l'aide du décodeur 18 que réalise l'opération inverse de celle effectuée par le codeur à somme bornée 2.

**Revendications**

1. Système de transmission hyperfréquence de données numériques formé d'un émetteur et d'un récepteur associé, l'émetteur comportant un dispositif de codage ayant une entrée (1) recevant les données numériques de rythme 1/T et une sortie de signal codé, et un oscillateur hyperfréquence libre (24) ayant une entrée de modulation de fréquence reliée à la sortie du dispositif de codage, pour délivrer directement le signal modulé à transmettre, le récepteur comportant en série des étages d'entrée, un démodulateur de phase cohérent et un dispositif de décodage, caractérisé en ce que le dispositif de codage comporte en série un premier codeur (2) réalisant un codage par blocs de n symboles de la suite des données numériques de période T en blocs de N symboles de période T'<T à deux états, n et N étant des nombres entiers et N>n, chaque bloc de N symboles étant à somme bornée, et un deuxième codeur (3) réalisant un codage de type Walsh I de la suite des symboles fournie par le premier codeur, en ce que le démodulateur restitue la suite d'éléments binaires de période T', et en ce que le dispositif de décodage comporte un décodeur (18) réalisant l'opération inverse de celle effectuée par le premier codeur.

2. Système de transmission selon la revendication 1, caractérisé en ce que le codage à somme bornée est du type nT correspondant à NT', avec N=n+1.

3. Système de transmission selon la revendication 1, caractérisé en ce que le démodulateur comporte un dispositif générateur (11, 10) ayant deux sorties de signaux en quadrature de phase et deux comparateurs de phase à quadrature (8, 9) ayant chacun une première et une deuxième entrée, et une sortie, les deux premières entrées étant couplées ensemble pour constituer l'entrée du démodulateur et les deux deuxièmes entrées étant respectivement couplées aux deux sorties du dispositif générateur, les sorties des comparateurs fournissant respectivement un signal biphase représentatif des signaux codés de période T' transmis et un signal porteur de même fréquence que celle du rythme 1/T' de la suite d'éléments binaires.

4. Système de transmission selon la revendication 2, caractérisé en ce que le dispositif générateur comporte un oscillateur (11) ayant une sortie connectée à l'entrée d'un coupler 3dB à quadrature (10) et une entrée de commande électrique en fréquence couplée, à travers un filtre de bande (13) en série avec un amplificateur (14), à la sortie de celui des deux comparateurs fournissant le signal biphase, le coupleur ayant deux sorties couplées aux deux sorties du dispositif générateur.

**Patentansprüche**

1. Höchstfrequenz-Digitaldaten-Übertragungssystem, das aus einem Sender und einem zugeordneten Empfänger gebildet ist, wobei der Sender eine Codiervorrichtung mit einem Eingang (1), der die Digitaldaten im Rhythmus 1/T empfängt, und einen Ausgang für das codierte Signal sowie einen freilaufenden Höchstfrequenz-Oszillator (24) umfaßt, der einen mit dem Ausgang der Codiervorrichtung verbundenen Höchstfrequenz-Modulationseingang aufweist, um das zu übertragende modulierte Signal direkt abzugeben, und wobei der Empfänger in Serie hintereinander Eingangsstufen, einen Kohärenzphasendemodulator und eine Decodiervorrichtung umfaßt, dadurch gekennzeichnet, daß die Codiervorrichtung in Reihe hintereinander einen ersten Codierer (2), der eine Codierung von Blöcken zu n Symbolen der Digitaldatenfolge mit der Periode T in Blöcke von N Symbolen der Periode T'<T mit zwei Zuständen vornimmt, wobei n und N ganze Zahlen sind und N>n, und wobei jeder Block aus N Symbolen von begrenzter Summe ist, und einen zweiten Codierer (3) enthält, der die von dem ersten Codierer gelieferte Folge von Symbolen einer Codierung vom Typ Walsh I unterzieht, daß der Demodulator die Folge von Binärelementen der Periode T' wiedergibt und daß die Decodiervorrichtung einen Decoder (18) umfaßt, der die zur Codierung des ersten Codierers inverse Operation durchführt.

2. Übertragungssystem nach Anspruch 1, dadurch gekennzeichnet, daß die Codierung mit begrenzter Summe von dem Typ ist, daß nT NT' enspricht, mit n=n+1.

3. Übertragungssystem nach Anspruch 1, dadurch gekennzeichnet, daß der Demodulator eine Generatorvorrichtung (11, 10) mit zwei um 90° gegeneinander phasenverschobenen Ausgängen und zwei Phasenquadratur-Vergleicher (8, 9) umfaßt, die jeweils einen ersten und einen zweiten Eingang sowie einen Ausgang aufweisen, wobei die beiden ersten Eingänge miteinander verbunden sind und den Demodulatoreingang bilden und die beiden zweiten Eingänge jeweils mit einem der zwei Ausgänge der Generatorvorrichtung verbunden sind und wobei die Ausgänge der Vergleicher ein Zweiphasensignal, welches die übertragenen codierten Signale der Periode T' darstellt, bzw, ein Trägersignal derselben Frequenz wie diejenige des Rhythmus 1/T' der Folge von Binärelementen abgeben.

4. Übertragungssystem nach Anspruch 2, dadurch gekennzeichnet, daß die Generatorvorrichtung einen Oszillator (11) umfaßt, dessen Ausgang mit dem Eingang eines 3dB-Quadraturkopplers (10) verbunden ist und dessen elektrischer Frequenzsteuereingang über ein Bandpaßfilter (13) in Reihe mit einem Verstärker (14) an den Ausgang desjenigen der zwei Vergleicher angekoppelt ist, der das Zweiphasensignal abgibt, wobei der Koppler zwei Ausgänge aufweist, die mit den zwei Ausgängen der Generatorvorrichtung gekoppelt sind.

**Claims**

1. Hyperfrequency digital data transmission system formed of a transmitter and an associated receiver, the transmitter comprising a coding device having an input (1) receiving the digital data of rhythm 1/T and a coded signal output, and a freely running hyperfrequency oscillator (24) having a frequency modulation input connected to the output of the coding device for directly providing the modulated signal to be transmitted, the receiver comprising, in series, input stages, a coherent phase demodulator and a decoding device, characterized in that the coding device comprises, in series, a first coder (2) for coding blocks of n symbols of the digital data sequence of the period T into blocks of N symbols of the period T'<T having two states, n and N being integers and N>n, each block of N symbols being of restricted sum, and a second coder (3) for providing a Walsh I type coding of the symbol sequence supplied by the first coder, in that the demodulator restores the sequence of binary elements of the period T', and in that the decoding device comprises a decoder (18) performing the inverted operation of that performed by the first coder.

2. Transmission system in accordance with claim 1, characterized in that the restricted sum coding is of the type nT corresponding to NT', with N=n+1.

3. Transmission system in accordance with claim 1, characterized in that the demodulator comprises a generator device (11, 10) having two phase quadrature outputs and two phase quadrature comparators (8, 9) each having first and second inputs and an output, the two first inputs being interconnected to form the input of the demodulator and the two second inputs being coupled to the two outputs of the generator device, respectively, the outputs of the comparators supplying a two-phase signal representative of the transmitted coded signals of period T' and a carrier signal of the same frequency as that of the rhythm 1/T of the binary element sequence, respectively.

4. Transmission system in accordance with claim 2, characterized in that the generator device comprises an oscillator (11) having an output connected to the input of a 3dB quadrature coupler (10) and an electric frequency control input connected to the output of that of the two comparators supplying the two-phase signal through a band filter (13) in series with an amplifier (14), the coupler having two outputs coupled to the two outputs of the generator device.

FIG_1

FIG.2·a

FIG.2·b

FIG.2·d

FIG.2·e

FIG.2·c

FIG_3-a

FIG_3-b

FIG_3-c